# EUROPEAN PATENT APPLICATION

(11) **EP 4 527 345 A1**
(43) Date of publication of application: **26.03.2025**
(21) Application number: 24202077.4
(22) Date of filing: 23.09.2024
(51) Int. Cl.: A61C 13/14

(54) **ERGONOMIC DENTAL ELEVATOR**

(30) Priority: 25.09.2023 US 202318445524
(71) Applicant: Roshkovan, Igor, Los Angeles, CA 90024-4502 (US)
(72) Inventor: Roshkovan, Igor, Los Angeles, CA 90024-4502 (US)
(74) Representative: Margue, Robert Germain

(57) **Abstract**

A dental elevator device is described herein, where the dental elevator has an ergonomic grip to facilitate the prying of teeth from the mouth of a patient. The device that may include a holder portion of the ergonomic dental elevator, a zig-zag shaped shank portion of the ergonomic dental elevator, and a honey spoon dipper shaped blade portion. The holder portion is ergonomically designed in the shape of a human hand to reduce fatigue and discomfort as the dentist performs his work.

## Description

### BACKGROUND PRIOR ART

This disclosure concerns improved dental care for dental patients, and more to a novel ergonomic dental elevator. This embodiment relates particularly to an ergonomic dental elevator hand instrument having ergonomically and hygienically improved and optimized handle portion shape which allows for more the anatomically natural and non-slip grip of the instrument and has reference to the tip portion of dental device that is particularly adapted for dental use which allow for more easily and efficiently elevate and extract teeth.

Surgical extraction of teeth is one of the most widespread procedures in dentistry. Tooth decay, dental trauma, conditions due to abnormalities in the tooth position, periodontal disease, or removal of specific teeth due to orthodontic requirements are subject to dental surgical intervention procedures.

A dental elevator is a specialized instrument used by dentists during certain dental procedures, particularly tooth extractions.

The following is a tabulation of some prior art that presently appears relevant:

### U.S. Patents

| Patent Number | Kind Code | Issue Date | Patentee |
|---|---|---|---|
| 427275 | A | 1890-05-06 | Siddall |
| 663068 | A | 1900-12-04 | Dodel |
| 1806592 | A | 1931-05-26 | Barone |
| 4204330 | A | 1980-05-27 | Ford |
| 4315745 | A | 1982-02-16 | Murata |
| 4443196 | A | 1984-04-17 | Rico |

### U.S. Patent Application Publications

| Publication Nr. | Kind Code | Publ. Date | Applicant |
|---|---|---|---|
| 20130244201 | A1 | 2013-09-19 | Lim |
| 20140234798 | A1 | 2014-08-21 | Lim |

### Foreign Patent Documents

| Foreign Doc. Nr. | Cntry Code | Kind Code | Pub. Dt | Patentee |
|---|---|---|---|---|
| 0625339 | EP | A1 | 1994-03 | Dobrivoje |
| 2410902 | GB | A | 2004-02 | Khan-Sullman |
| 2009/118741 | WO | A 2 | 2009-10 | Findler |

Dental elevator devices are used in dentistry to extract teeth or root tips of teeth. A dental elevator has a holder piece, a shank, and a blade or working end portion. All previous devices for removing teeth are typically considered undesirable for dental practitioners.

Musculoskeletal disorders are significantly coupled together with occupation diseases in dentists such as Carpal tunnel syndrome due to poor design of dental instruments. The majority of these diseases can be reduced with more attention to the principles of ergonomics.

A poor design of the holder part causes wrist pain, finger-related symptoms, and the prevalence of musculoskeletal disorders such as damage or compression of median nerves also known as carpal tunnel syndrome. Dental practitioners are exposed to different work-related hazards during the surgical extraction of teeth due to a lack of ergonomic factors. The professional ergonomic risks can induce musculoskeletal disorders and can include hand-wrist tract.

In addition to these inconveniences, other handle designs create discomfort for dental practitioners through uncomfortable gripping, making extraction movements very ineffective due to the failure of the structure design of the dental elevator. The embodiments described herein describe an ergonomic dental elevator designed to help a dental practitioner perform extractions easily.

An ergonomic dental elevator described herein is designed to provide optimal comfort and control for the dental practitioner while minimizing the strain on their hand and wrist.

The design of an ergonomic dental elevator aims to improve the dentist's precision and control while reducing the physical strain associated with repetitive movements.

By providing a more comfortable grip and ease of use, it can contribute to the overall ergonomics and well-being of the dental practitioner during dental procedures.

The length and the angle of a holder of the dental elevator will vary depending upon whether the dental instrument is to be used on the distal or mesial surface of a tooth structure and the position of the size and configuration of a blade portion vary depending upon whether the tooth is in an anterior or posterior position.

As a result, we need for research-based design of an ergonomic dental elevator with coded patterns which effectively offers to dentist an entirely innovative way of gripping the dental elevator to remove a tooth with significantly less trauma to the upper limb of the dentist.

### BRIEF SUMMARY AND OBJECT OF THE EMBODIMENT

In reaction to the complications and problems discussed herein, a very effective and novel-design ergonomic dental elevator is provided.

The present inventions show the application of the basics of ergonomic science in dentistry. The appropriate ergonomic design of the presented innovation will avoid monotonous strain injuries in dental practitioners.

Moreover, a dental elevator holder could be designed based on a three or four-finger grip that concentrates on comfort, support, and stability of the dentist's hand, with a focus on reducing strain and providing a secure grip for a range of activities such as surgical extractions. An ergonomic dental elevator holder could be designed based on a three or four-finger grip form with three distinct finger grooves, each positioned for optimal comfort and support and designed to accommodate these three or four fingers, with a slightly curved shape that contours to the natural curves of the fingers. The first two finger groves may be positioned to allow a dental practitioner to grip the dental elevator holder with their index and middle fingers. Additional groves for ring and pinky fingers, sited closely together, give additional support and stability. Also, the finger grooves could be designed to prevent any one finger from accepting too much pressure during a surgical extraction procedure performed by dental practitioners. In addition, the size of the fingers that will be gripping an ergonomic dental elevator holder may reflect the design of the finger grooves. Furthermore, the finger grooves could be sized accordingly to accommodate a range of finger sizes of dental practitioners. Moreover, the finger grooves of an ergonomic dental elevator could be larger and deeper than the sizes of the dentist's fingers and more supportive to prevent strain or injury. Likewise, the shape and positioning of the finger grooves may respect the natural curvature of the dental practitioner's hand to provide ergonomic support, comfort, and stability. The curvature of the dental elevator holder could also allow for a full range of motion of the dental practitioner's fingers. Additionally, the finger grooves of the dental elevator holder may be positioned and shaped to allow for a range of grip styles that could accommodate the hand different movements of the dental practitioner during the surgical extraction procedure.

In addition, an ergonomic dental elevator holder could also feature a textured surface, creating a supplemental grip and decreasing the sliding of the holder by the dental practitioner's hand during high-intensity activities such as surgical extractions.

Additionally, the material for the holder of an ergonomic dental elevator could impact the dentist's grip and comfort intensity. Materials for an ergonomic dental elevator holder's surface may be chosen so that the surface will be slightly rough and can make gripping the holder comfortable for dental practitioners, reducing the risk of hand fatigue and discomfort. Correspondingly, the ergonomically designed handle of a novel dental elevator may have a textured surface or grip to ensure a secure hold. Also, the material of an ergonomic dental elevator holder itself could be chosen for its durability and strength, like metal or plastics.

The present inventions achieve these and other objectives by providing dental elevators with an ergonomic hand grip with an ergonomically designed grip holder that has an ergonomically designed rear surface holder positioning feature and an ergonomically designed front surface holder positioning feature.

In addition, the ergonomic handles may be molded so the dental practitioner grabs this part with the dentist's whole hand, re-distributing pressure to the intrinsic muscles of the dentist's hand, providing optimum comfort, and relieving and avoiding stress on the recurrent branch of the median nerve and surrounding muscles.

In other embodiments of the present inventions, the ergonomic dental elevator may have the features of being relatively rigid due to the dental elevator being aligned to provide support to the hand of the dentist during extraction in the area of operation.

One embodiment of the present invention is directed to an ergonomic dental elevator comprising a holder piece having ergonomically and hygienically improved and optimized handle portion shape.

According to other aspects of the present inventions, these special characteristics of the ergonomic dental elevator holder could include the front section, palmar recess section, arched upper rear section, and arched lower rear wrist extension section of the dental elevator holder.

Moreover, the front section of the dental elevator holder may also feature basic finger grooves for each finger.

Another object of the present inventions is the novel concept of a holder portion front section that has tracks and grooves not only for the index and middle fingers but for the other two fingers (the ring and little fingers).

In addition, the surfaces of finger grooves could be concave in nature.

In still another object of the present inventions is that the holder of the dental elevator feature may have two rear extensions, also called an arching upper rear extension and wrist extension sections.

One embodiment of the present inventions is directed to the rear arching upper extension spreads in a horizontal direction from the upper hand portion to the direction of the surface located between thumb and index finger and a distance of about 2 inches and no greater than about 5 inches.

Another object of the present inventions is that the arching back extension is a circular arc that extends upward and backward from the holder of the dental elevator and ends at a point that has an angle of inclination up to 90 degrees toward the vertical axis of the center point of the holder of the dental elevator.

Likewise, the upper arching rear extension of the ergonomic dental elevator holder may be a continuation in the opposite direction of the upper front extension of the holder portion with an ergonomic dental elevator that goes through space to form a location for the thumb and index fingers.

In addition, other objects of the present inventions also have other possible characteristics that improve the ergonomic design of the dental elevator holder portion, which includes a wrist extension section.

In another embodiment of the present inventions, the waxing crescent moon-shaped palmar recess section of the ergonomic dental elevator holder starts from an arched upper rear extension that incorporates the lower rear wrist extension and provides better hand support.

In one embodiment of the inventions, the holder comprises a lower rear wrist extension which engages the wrist joint for the dental provider hand.

One embodiment of the present disclosure is directed to the lower rear wrist extension that is helping to generate power and control during movements by the dental practitioner. This allows for a much more comfortable range of movements and should increase the sensation of hand pressure of the dental practitioner.

As the dental elevator holder is held by a dental practitioner, the user gets the correct fit for their hand size and allows for more natural grabbing.

An advanced object of the current inventions is a zig-zag shaped shank of an ergonomic dental elevator. This unique shank design resembles a series of short, alternating angles.

Therefore, an item of the present embodiment is to provide a new concept and value-added zig-zag shaped shank to allow better access during the procedure and provide greater control and maneuverability during tooth extraction surgery. This prevents the instrument from sliding into the oral cavity of the patient during extraction, avoiding tissue damage.

The working end of the zig-zag shape shank dental elevator is a unique and innovative flat honey spoon dipper-shaped blade. It is specifically designed to help in the elevation, loosening, and extraction of teeth and root tips from their sockets by dental professionals. The dipper blade is shaped like a honey spoon, with an innovative ergonomic dental elevator having a curved, semi-rounded bowl at the end. It is specifically designed to help in the elevation, loosening, and extraction of teeth and root tips from their sockets by dental professionals.

The shaped blade seems like a small, shallow spoon used for dipping honey, but with sharper edges for effective manipulation during the tooth extraction procedure. This unique innovative blade is inserted into the periodontal ligament space, which is the space between the tooth and the surrounding bone structure.

Also, by applying controlled pressure and leveraging the dipper blade, the dental practitioner can loosen the tooth or root tip from its socket more easily.

The ergonomic dental elevator parts such as the shank and blade could be made of high-quality stainless steel for durability and ease of sterilization.

The present inventions could be used for other new innovative medical instruments in other medical fields such as general surgery, urology, pulmonology, orthopedic surgery, cardiology, etc.

By taking these considerations into account, the novel ergonomic dental elevator holder could be designed for a three or four-finger grip with a zig-zag shank and a honey spoon-shaped dipper blade that will supply a comfortable, secure grip for a range of active movements during dental extraction surgery.

### BRIEF DESCRIPTION OF THE DRAWINGS

The invention will be further illustrated by reference to the following figures:
Fig. 1 is a perspective view of the first embodiment of an ergonomic dental elevator in accordance with the present inventions,
Fig. 2 is a front view of an ergonomic dental elevator of the present inventions,
Fig. 3 is a back view of an ergonomic dental elevator of the present inventions,
Fig. 4 is a side view of an ergonomic dental elevator of the present inventions,
Fig. 5 is a top view of an ergonomic dental elevator of the present inventions,
Fig. 6 illustrates an ergonomic dental elevator held by the hand of the dental practitioner.

It is understood that the following description and references to the figures concern exemplary embodiments of the present invention and shall not be limiting the scope of the claims.

### DETAILED DESCRIPTION OF ILLUSTRATIVE EMBODIMENTS

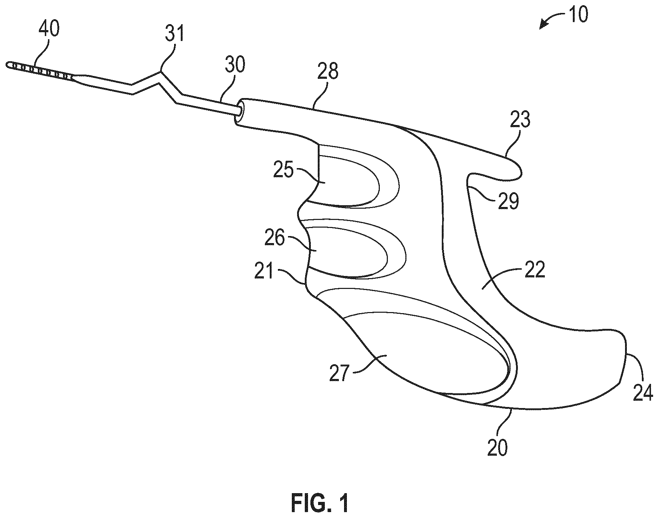

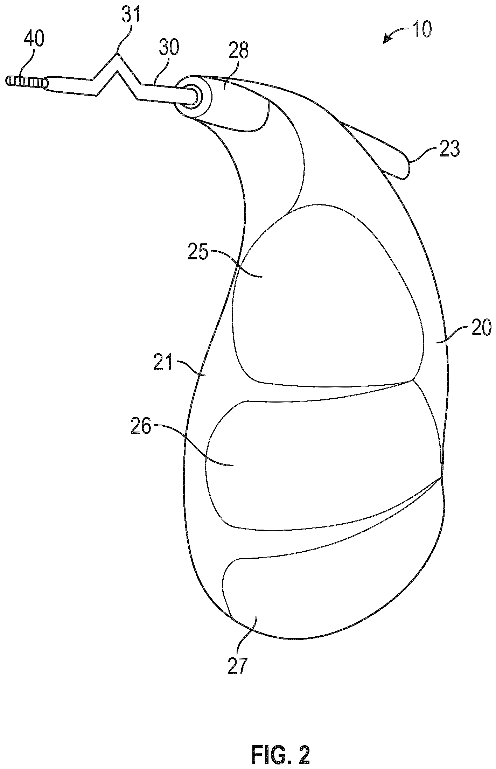

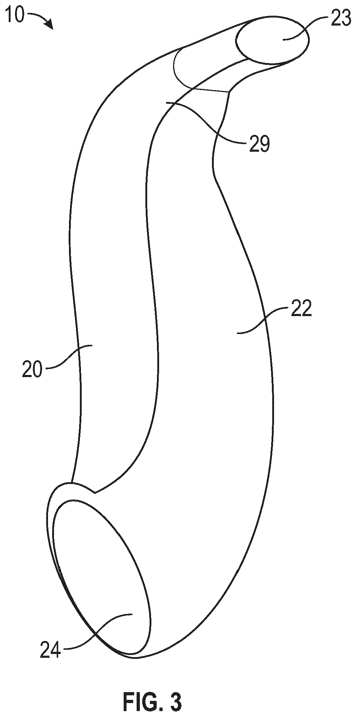

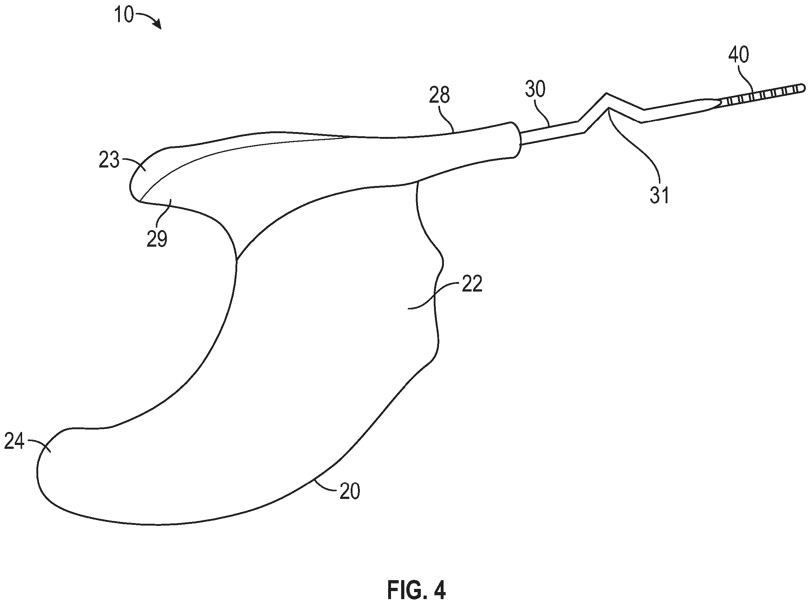

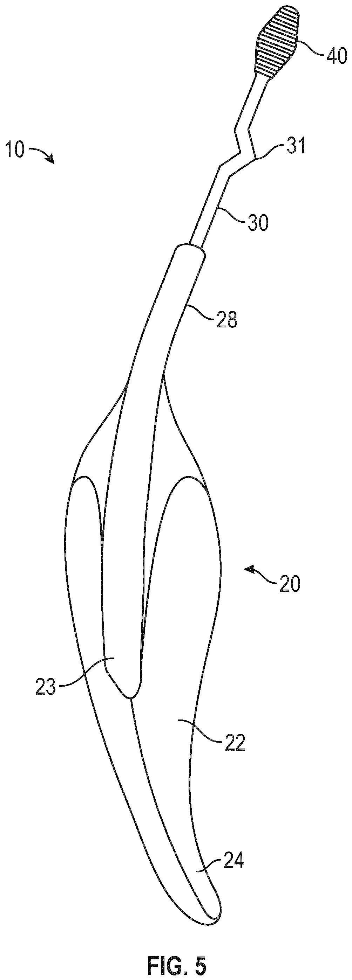

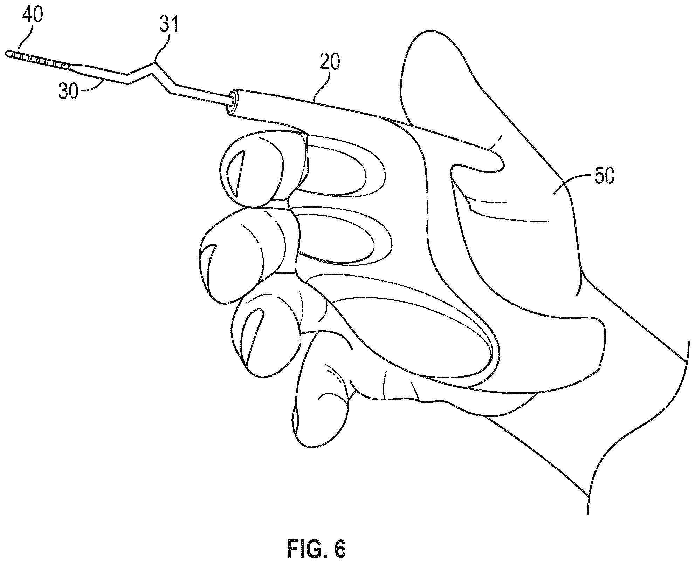

An embodiment of an ergonomic dental elevator 10 of the present inventions as shown in FIGS. 1-6. Referring specifically to FIGS. 1, 2, 3, 4, and 5, the ergonomic dental elevator 10 could include a holder portion of an ergonomic dental elevator 20, a zig-zag shaped shank portion 30 of an ergonomic dental elevator, and honey spoon dipper-shaped blade portion of an ergonomic dental elevator 40.

The holder portion of an ergonomic dental elevator 20 could be crescent moon-shaped in nature.

The holder portion 20 of the ergonomic dental elevator may include the front section 21, the palmar recess section 22, the arched upper rear section 23, the arched lower rear wrist extension 24 section, and the upper front extension of the holder portion 28.

As shown in FIGS. 1,2,4 the front section of the holder portion of the ergonomic dental elevator may be formed from at least three grooves for fingers, a groove for the index finger 25, a groove for the middle finger 26, and a wide groove for the ring and little fingers 27.

The palmar recess section 22 of holder portion 20 of an ergonomic dental elevator 10 may have a waxing crescent moon shape (See FIGS. 1,3,4,5).

In another embodiment of the present inventions, the waxing crescent moon shape palmar recess section 22 of the ergonomic dental elevator holder 20 could start from the arched upper rear extension 23 and incorporate the lower rear wrist extension 24 (See FIGS. 1,3,4,5).

As shown in FIGS. 1, 3, 4, and 5 an arched upper rear extension 23 of holder portion 20 could be a circular arc that extends upward and backward from the holder of dental elevator 10 and ends at a point that may have an angle of inclination up to 90 degrees toward the vertical axis of the center point of the holder of dental elevator.

Holder 20 could be designed such that the dental practitioner's thumb and index are positioned within notch 29 of the rear section.

The zig-zag shaped shank 40 could be a continuation of the upper front extension 28 of holder portion 20 of an ergonomic dental elevator 10 (See FIGS. 1-4, and 5). The zig-zag shaped shank 40 could include a series of short angles 31 in alternating directions (See FIGS. 1, 2, 4, 5). The working end of the zig-zag shape shank 30 of dental elevator 10 could be a flat honey spoon dipper-shaped blade 40.

As shown in FIGS. 1,2,4,5 a blade portion 40 could resemble a honey spoon dipper shaped like a curved, semi-rounded flat bowl at the end.

Although specific embodiments of the inventions have been disclosed in detail for illustrative purposes, it will be recognized that variations and modifications of the disclosed device, including the rearrangement of parts, lie within the scope of the present embodiment.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

### REFERENCE NUMERALS

- 10: Ergonomic dental elevator
- 20: Holder portion of an ergonomic dental elevator
- 21: Front section of holder portion of an ergonomic dental elevator
- 22: Crescent moon-shaped palmar recess section of the holder portion of an ergonomic dental elevator
- 23: Arched upper rear extension of holder portion of an ergonomic dental elevator
- 24: Arched lower wrist extension of holder portion of an ergonomic dental elevator
- 25: Groove for index finger
- 26: Groove for middle finger
- 27: Groove for ring and little fingers
- 28: Upper front extension of holder portion of an ergonomic dental elevator
- 29: Notch of the holder portion
- 30: Zig zag shaped shank portion of an ergonomic dental elevator
- 31: Zig zag shaped shank portion short angle
- 40: Honey spoon dipper-shaped blade portion of an ergonomic dental elevator
- 50: Hand of a dental practitioner

## Claims

1. An ergonomic dental elevator comprising:
a holder portion of the ergonomic dental elevator,
a zig-zag shaped shank portion of the ergonomic dental elevator, and
a honey spoon dipper shaped blade portion.

2. The ergonomic dental elevator of claim 1 wherein the holder portion has a waxed crescent moon shape.

3. The ergonomic dental elevator of claim 2 wherein said holder comprises a front section, palmar recess section, arched upper rear section, arched lower rear wrist extension section, and upper front extension of the holder portion.

4. The ergonomic dental elevator of claim 3 wherein said front section of the holder portion of the ergonomic dental elevator is formed at least three grooves for fingers, a first groove for an index finger, a second groove for a middle finger, and a wide groove for a ring finger and a little finger.

5. The ergonomic dental elevator of claim 3 wherein said palmar recess section of the holder portion has a waxing crescent moon shape.

6. The ergonomic dental elevator of claim 5 wherein said waxing crescent moon shape palmar recess section starts from arched upper rear extension and incorporates to the lower rear wrist extension.

7. The ergonomic dental elevator of claim 3 wherein said arched upper rear extension is a circular arc that extends upward and backward from the holder of the dental elevator and ends at a point that has an angle of inclination up to 90 degrees toward a vertical axis of a center point of the holder of the dental elevator.

8. The ergonomic dental elevator of claim 1 wherein said the zig-zag shaped shank is a continuation of an upper front extension of the holder portion of the ergonomic dental elevator.

9. The ergonomic dental elevator of claim 1 wherein said the zig-zag shaped shank includes a series of short angles in alternating directions.

10. The ergonomic dental elevator of claim 1 wherein said blade has a flat honey spoon dipper shape.

11. The ergonomic dental elevator of claim 1 wherein said holder is made from one piece.

12. The ergonomic dental elevator of claim 11 wherein the holder is made of rigid plastic material.

13. The ergonomic dental elevator of claim 11 wherein the holder is made of metal.

14. The ergonomic dental elevator of claim 1 wherein said shank and blade are made from one piece.
